(19) Europäisches Patentamt / European Patent Office / Office européen des brevets

(11) **EP 2 471 873 B1**

(12) **EUROPEAN PATENT SPECIFICATION**

(45) Date of publication and mention
of the grant of the patent:
**30.09.2015 Bulletin 2015/40**

(21) Application number: **10811860.5**

(22) Date of filing: **24.08.2010**

(51) Int Cl.:
*C08L 101/02* (2006.01)   *C08F 2/38* (2006.01)
*C08F 2/50* (2006.01)   *C08K 5/103* (2006.01)
*C08K 5/37* (2006.01)

(86) International application number:
**PCT/JP2010/064285**

(87) International publication number:
**WO 2011/024810 (03.03.2011 Gazette 2011/09)**

(54) **ENERGY RAY-CURABLE GASKET**

MIT ENERGIESTRAHLEN HÄRTBARE DICHTUNG

JOINT DURCISSABLE SOUS L'ACTION D'UN RAYONNEMENT ÉNERGÉTIQUE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **25.08.2009 JP 2009194267**

(43) Date of publication of application:
**04.07.2012 Bulletin 2012/27**

(73) Proprietor: **Bridgestone Corporation
Tokyo 104-8340 (JP)**

(72) Inventor: **KURATA, Toshihiko
Yokohama-shi
Kanagawa 244-8510 (JP)**

(74) Representative: **Oxley, Robin John George et al
Marks & Clerk LLP
90 Long Acre
London WC2E 9RA (GB)**

(56) References cited:
**JP-A- 7 330 837       JP-A- 7 330 837
JP-A- 2008 297 350   JP-A- 2008 297 350**

**Description**

TECHNICAL FIELD

The present invention relates to a gasket comprising an energy ray-curable elastomer composition, and more precisely an energy ray-curable elastomer composition capable of giving an elastomer cured product which satisfies both high elongation at break and good processability and of which the compression set is small.

BACKGROUND ART

In general, a composition giving so-called rubber characteristics of flexibility, elongability and elasticity is referred to as an elastomer. Since the fatigue durability thereof to vibration is foremost excellent as compared with that of other polymer materials, the composition is applied to automobile parts such as tires, etc.; sealing parts for building structures such as those for civil engineering and construction, etc.; packing parts such as O rings, etc.; gasket parts; acoustic parts such as speakers, etc.; sheet parts such as key sheets for mobile telephones, etc.; antivibration materials; parts of other various mechanistic parts, etc.

Recently, computer HDD (hard disc drives) have become desired to be much sophisticated and small-sized and have come to have a complicated circuit configuration, and consequently, they may be damaged even though contaminated with slight dust. In practice, therefore, dust control has become much needed, and in general, contamination with dust is prevented by the use of a gasket.

As a method for producing gaskets for HDD, there has been employed a method of injection-molding a thermoplastic elastomer or the like into them, or a method comprising blanking a sheet of EPDM (ethylene propylene diene rubber) or a fluororubber into pieces each having a predetermined shape followed by bonding them.

On the other hand, recently, for the purpose of capital spending and processing cost cuts, there has become employed a method for producing gaskets, which comprises applying a photocurable sealant composition to an adherend with a dispenser, shaping it and curing it mainly with UV rays (for example, see Patent Reference 1). For attaining sufficient sealability for gaskets, an urethane acrylate oligomer is used in the photocurable sealant composition as the main ingredient thereof in order that the cured product could have a low hardness.

Regarding the elastic material comprising such a photocurable sealant composition, the molecular weight between crosslinks in the material must be increased for increasing the elongation at break of the material. For increasing the molecular weight between crosslinks, it may be taken into consideration to increase the molecular weight of the urethane acrylate oligomer, but in this case, the viscosity of the photocurable sealant composition increases, and therefore, in coating with the composition by the use of a dispenser, the processability of the composition would inevitably worsen, and therefore, the method would be hardly employed. As a method for increasing the elongation at break, a method may be taken into consideration which comprises incorporating an oil into the composition. However, the method is problematic in that the oil may bleed out to cause staining, and is therefore not sufficient. Accordingly, it has been difficult to control the mechanical characteristics of the elastic material comprising a cured product of a UV-curable sheet material composition.

On the other hand, regarding an ene-thiol photocurable resin composition, which is a radical polymerization-type photocurable composition, even when radical inactivation caused by oxygen occurs therein, an active thiyl radical is regenerated, and therefore, the composition has become specifically noted as a photocurable material as having advantages that there is no polymerization interference by oxygen as in an acrylic material, the amount of the photoinitiator to be sued may be reduced, the volume shrinkage in curing is small, the composition can cure within a short period of time of from a few seconds to a few minutes from the start of polymerization, a broad material planning is possible that covers from a cured product having an extremely high hardness to a soft cured product, and a thick-film cured product having a thickness of 1 mm or more can be produced (see Non-Patent Reference 1).

As the ene-thiol photocurable resin composition, for example, there are disclosed (1) a photocurable resin composition containing a polyene, a polythiol and a compound having a bromine-substituted aromatic ring having a specific structure, in which the ratio by mass of the polyene to the polythiol is from 49/1 to 1/49 (see Patent Reference 2), and (2) an ene-thiol photocurable resin composition containing a polyene compound and a (poly) thiol monomer of a reaction product of a polyamine compound and a mercaptocarboxylic acid compound (see Patent Reference 3).

However, the technique disclosed in the above-mentioned Patent Reference 2 is a technique for providing a photocurable resin composition having a high refractive index and capable of controlling the refractive index thereof with high accuracy, and nothing is referred to at all in the patent reference relating to the elongation at break and the processability of the composition. The technique disclosed in the Patent Reference 3 is a technique of giving a cured product, in which there occurs no polymerization interference by oxygen, the composition can cure within a short period of time, the volume shrinkage of the cured product is small, the amount of the photoinitiator to be used can be reduced, and the moisture resistance of the cured product is greatly enhanced; but the patent reference refers to nothing at all relating to the elongation at break and the processability of the cured product.

Given the situation and for the purpose of providing an energy ray-curable elastomer composition capable of enlarging the molecular weight between crosslinks and capable of giving an elastomer that satisfies both high elongation at break and good processability, not changing the type of the uncured, energy ray-curable composition, the present inventor proposed an energy ray-curable elastomer composition containing a (meth)acryloyl group-having energy ray-curable compound and a polythiol compound having from 2 to 6 mercapto groups in the molecule thereof, in which the functional group number ratio of the (meth)acryloyl groups to the mercapto groups in the polythiol compound is from 100/0.1 to 100/5n (where n indicates the number of the mercapto groups in one molecule of the polythiol compound) (Japanese Patent Application 2009-108158).

JP2008-297350 discloses a curable composition for use in a scratch resistant plate and JP07-330837 discloses the use of a curable resin composition in a composition for the sustained release of a gas.

Patent Reference 1: JP-A 2003-7047
Patent Reference 2: JP-B 4034098
Patent Reference 3: JP-A 2007-70417
Non-Patent Reference 1: "Future Outlook of UV/EB Curing Technology" by CMC Publishing, 2002, pp. 39-50

DISCLOSURE OF THE INVENTION

The present invention is an improvement of the energy ray-curable elastomer composition disclosed in Japanese Patent Application 2009-108158, and its object is to provide a gasket comprising a cured energy ray-curable elastomer composition that satisfies both high elongation at break and good processability and has a further reduced compression set.

The present inventors have assiduously studied for the purpose of attaining the above-mentioned object and, as a result, have found that a gasket comprising a cured energy ray-curable elastomer composition containing a (meth) acryloyl group-having energy ray-curable compound and a polythiol compound having from 2 to 6 mercapto groups in the molecule thereof and containing, as added thereto, a specific amount of a polyfunctional (meth) acrylate, in which the functional group number ratio of the (meth) acryloyl groups to the mercapto groups is defined to fall within a specific range, can attain the object. The present invention has been completed on the basis of this finding.

Specifically, the present invention provides the following:

[1] A gasket comprising a cured energy ray-curable elastomer composition containing (A) a (meth)acryloyl group-having energy ray-curable compound, (B) a polythiol compound having from 2 to 6 mercapto groups in the molecule, and (C) a polyfunctional (meth)acrylate, wherein the functional group number ratio of the (meth) acryloyl groups in the ingredient (A) to the mercapto groups in the ingredient (B) is from 100/0.1 to 100/5n (where n indicates the number of the mercapto groups in one molecule of the polythiol compound) and wherein the amount of the ingredient (C) is from 1 to 8 parts by mass relative to 100 parts by mass of the ingredient (A),

[2] The gasket of the above [1], wherein the molecular weight between crosslinks of the energy ray-irradiated cured product, as computed according to the Flory-Rehner's equation, is from 4,000 to 55,000,

[3] The gasket of the above [1] or [2], wherein the (meth)acryloyl group-having energy ray-curable compound (A) is a compound having at least two (meth)acryloyl groups in the molecule thereof,

[4] The gasket of the above [3], wherein the (meth)acryloyl group-having energy ray-curable compound is an energy ray-curable oligomer,

[5] The gasket of the above [4], wherein the energy ray-curable oligomer is at least one selected from urethane-type (meth)acrylate oligomers, polyester-type (meth)acrylate oligomers, polyether-type (meth)acrylate oligomers, epoxy-type (meth)acrylate oligomers, conjugated diene polymer-type (meth)acrylate oligomers and their hydrogenated derivatives,

[6] The gasket of any of the above [1] to [5], wherein the polythiol compound having from 2 to 6 mercapto groups in the molecule thereof (B) is a β-mercaptopropionic acid ester with a polyalcohol having from 2 to 6 hydroxyl groups,

[7] The gasket of the above [6], wherein the polyalcohol having from 2 to 6 hydroxyl groups is an alkanediol having from 2 to 20 carbon atoms, a poly(oxyalkylene) glycol, glycerol, diglycerol, trimethylolpropane, ditrimethylolpropane, pentaerythritol or dipentaerythritol,

[8] The gasket of any of the above [1] to [7], in which the energy ray is a UV ray and which contains (D) a photoradical polymerization initiator, and

[9] The gasket of the above [8], wherein the photoradical polymerization initiator is an intramolecular cleavage type and/or a hydrogen drawing type.

[10] The use of an energy ray-curable elastomer composition as defined in any of the above [1] to [9] in a gasket.

[11] The gasket of any of above [1] to [9] or the use as a gasket of [10], wherein the gasket is for hard disc drives.

According to the present invention, there is obtained gasket comprising an elastomer cured product, of which the molecular weight between crosslinks can be increased and which satisfies both high elongation at break and good processability and has a small compression set, not changing the type of the uncured, energy ray-curable compound.

MODE FOR CARRYING OUT THE INVENTION

The energy ray-curable elastomer composition (hereinafter this may be simply referred to as elastomer composition) used in the present invention contains (A) a (meth)acryloyl group-having energy ray-curable compound, (B) a polythiol compound having from 2 to 6 mercapto groups in the molecule, and (C) a polyfunctional (meth)acrylate, wherein the functional group number ratio of the (meth) acryloyl groups in the ingredient (A) to the mercapto groups in the ingredient (B) is from 100/0.1 to 100/5n (where n indicates the number of the mercapto groups in one molecule of the polythiol compound) and wherein the amount of the ingredient (C) is from 1 to 8 parts by mass relative to 100 parts by mass of the ingredient (A).

[(A) Energy Ray-Curable Compound]

In the elastomer composition used in the present invention, used is a (meth)acryloyl group-having energy ray-curable compound as the ingredient (A). Preferably, the energy ray-curable compound has at least two (meth)acryloyl groups in the molecule thereof, from the viewpoint of the performance and the processability of the elastomer to be obtained. The number of the (meth) acryloyl groups in one molecule is generally from 2 to 6 or so, preferably from 2 to 4.
The (meth) acryloyl group indicates an acryloyl group or a methacryloyl group.
The energy ray-curable compound of the type is preferably a (meth)acryloyl group-having energy ray-curable oligomer.

((Meth)acryloyl Group-Having Energy Ray-Curable Oligomer)

The (meth)acryloyl group-having energy ray-curable oligomer is not specifically defined, for which, for example, there may be mentioned urethane-type (meth) acrylate oligomers, polyester-type (meth)acrylate oligomers, polyether-type (meth) acrylate oligomers, epoxy-type (meth) acrylate oligomers, conjugated diene polymer-type (meth)acrylate oligomers and their hydrogenated derivatives.
The urethane-type (meth)acrylate oligomer may be obtained, for example, by esterifying a polyurethane oligomer obtained through reaction of a polyether polyol or a polyester polyol and a polyisocyanate, with a (meth)acrylic acid.
The polyester-type (meth)acrylate oligomer may be obtained, for example, by esterifying the hydroxyl group of a polyester oligomer having a hydroxyl group at both terminals thereof, which is obtained through condensation of a polycarboxylic acid and a polyalcohol, with a (meth)acrylic acid; or by esterifying the hydroxyl group at the terminal of an oligomer obtained by addition of an alkylene oxide to a polycarboxylic acid, with a (meth)acrylic acid.
The polyether-type (meth)acrylate oligomer may be obtained by esterifying the hydroxyl group of a polyether polyol with a (meth)acrylic acid; the epoxy-type (meth)acrylate oligomer may be obtained, for example, by reacting the oxirane ring of a bisphenol-type epoxy resin or a novolak-type epoxy resin having a relatively low molecular weight, with a (meth)acrylic acid followed by esterification. Also usable here is a carboxyl-modified epoxy acrylate oligomer, which is prepared by partially modifying the epoxy-type (meth) acrylate oligomer with a dibasic carboxylic acid anhydride.
The conjugated diene-type (meth)acrylate oligomer includes, for example, an SBR diacrylate obtained through acrylic modification of a liquid styrene-butadiene copolymer, a polyisoprene diacrylate obtained through acrylic modification of a polyisoprene, etc.; and the hydrogenated conjugated diene-type (meth) acrylate oligomer may be obtained by esterifying the hydroxyl group of the hydrogenated polybutadiene or the hydrogenated polyisoprene having a hydroxyl group at both terminals thereof, with a (meth) acrylic acid.
The (meth)acrylate indicates an acrylate or a methacrylate; and the (meth)acrylic acid indicates an acrylic acid or a methacrylic acid.
In the present invention, one alone or two or more different types of (meth)acryloyl group-having energy ray-curable oligomers may be used either singly or as combined; and for example, for use for sealant parts for gaskets or the like, preferred are bifunctional urethane-type (meth) acrylate oligomers of the above-mentioned oligomers, from the viewpoint of the performance and the processability of the elastomer to be obtained. The bifunctional urethane-type (meth)acrylate oligomer means that one molecule of the urethane-type (meth)acrylate oligomer contains two (meth)acryloyl groups.

[(B) Polythiol Compound]

In the energy ray-curable elastomer composition used in the present invention, the polythiol compound to be used as the ingredient (B) is a compound having from 2 to 6 mercapto groups in the molecule thereof.

Not specifically defined, the polythiol compound of the above type may be any one having from 2 to 6 mercapto groups in the molecule thereof, including, for example, aliphatic polythiols such as alkanedithiols having from 2 to 20 carbon atoms or so, etc.; aromatic polythiols such as xylylenedithiol, etc.; polythiols prepared by substituting the halogen atom of an alcohol halohydrin adduct with a mercapto group; polythiols that are products of hydrosulfurization of a polyepoxide compound; polythiols that are esterified products of a polyalcohol having from 2 to 6 hydroxyl groups in the molecule thereof with thioglycolic acid, β-mercaptopropionic acid or β-mercaptobutanoic acid, etc.

Of those polythiols, preferred are esterified products of a polyalcohol having from 2 to 6 hydroxyl groups in the molecule thereof with thioglycolic acid, β-mercaptopropionic acid or β-mercaptobutanoic acid, as having good reactivity and capable of being readily controlled in point of the chemical structure thereof; and especially preferred are polythiols that are esterified products with β-mercaptopropionic acid, and esterified products with β-mercaptobutanoic acid.

The polyalcohol having from 2 to 6 hydroxyl groups in the molecule thereof includes alkanediols having from 2 to 20 carbon atoms, poly(oxyalkylene)glycols, glycerol, diglycerol, trimethylolpropane, ditrimethylolpropane, pentaerythritol, dipentaerythritol, etc.

The alkanediol having from 2 to 20 carbon atoms may be linear, branched or cyclic, including, for example, ethylene glycol, trimethylene glycol, propylene glycol, 1,3-butanediol, 1,4-butanediol, neopentyl glycol, 1,6-hexanediol, 1,8-octanediol, 1,9-nonanediol, 1,12-dodecanediol, cyclohexane-1,4-dimethanol, hydrogenated bisphenol A, etc.

The poly(oxyalkylene)glycol includes, for example, diethylene glycol, triethylene glycol, polyethylene glycol, dipropylene glycol, tripropylene glycol, polypropylene glycol, polytetramethylene ether glycol, cyclohexane-1,4-dimethanol ethyleneoxide adduct, hydrogenated bisphenol A ethyleneoxide adduct, cyclohexane-1,4-dimethanol propyleneoxide adduct, hydrogenated bisphenol A propyleneoxide adduct, etc.

In the present invention, as the polythiol compound for the ingredient (B), for example, preferred is use of ethyleneglycol di(thioglycolate), ethyleneglycol di(β-mercaptopropionate), ethyleneglycol di(β-mercaptobutanoate), trimethylene glycol di(thioglycolate), trimethylene glycol di(β-mercaptopropionate), trimethylene glycol di(β-mercaptobutanoate), propylene glycol di (thioglycolate), propylene glycol di(β-mercaptopropionate), propylene glycol di(β-mercaptobutanoate), 1,3-butanediol di(thioglycolate), 1,3-butanediol di(β-mercaptopropionate), 1,3-butanediol di(β-mercaptobutanoate), 1,4-butanediol di(thioglycolate), 1,4-butanediol di(β-mercaptoprolonate), 1,4-butanediol di(β-mercaptobutanoate), neopentyl glycol di(thioglycolate), neopentyl glycol di(β-mercaptopropionate), neopentyl glycol di(β-mercaptobutanoate), 1,6-hexanediol di(thioglycolate), 1,6-hexanediol di(β-mercaptopropionate), 1,6-hexanediol di(β-mercaptobutanoate), 1,8-octanediol di(thioglycolate), 1,8-octanediol di(β-mercaptopropionate), 1,8-octanediol di(β-mercaptobutanoate), 1,9-nonanediol di(thioglycolate), 1,9-nonanediol di(β-mercaptopropionate), 1,9-nonanediol di(β-mercaptobutanoate), cyclohexane-1,4-dimethanol di(thioglycolate), cyclohexane-1,4-dimethanol di(β-mercaptopropionate), cyclohexane-1,4-dimethanol di(β-mercaptobutanoate), diethylene glycol di(thioglycolate), diethylene glycol di (β-mercaptopropionate), diethylene glycol di(β-mercaptobutanoate), triethylene glycol di(thioglycolate), triethylene glycol di(β-mercaptopropionate), triethylene glycol di(β-mercaptobutanoate), polyethylene glycol di(thioglycolate), polyethylene glycol di(β-mercaptopropionate), polyethylene glycol di(β-mercaptobutanoate), dipropylene glycol di(thioglycolate), dipropylene glycol di(β-mercaptopropionate), dipropylene glycol di(β-mercaptobutanoate), tripropylene glycol di(thioglycolate), tripropylene glycol di(β-mercaptopropionate), tripropylene glycol di(β-mercaptobutanoate), polypropylene glycol di(thioglycolate), polypropylene glycol di(β-mercaptopropionate), polypropylene glycol di(β-mercaptobutanoate), polytetramethylene ether glycol di(thioglycolate), polytetramethylene ether glycol di(β-mercaptopropionate), polytetramethylene ether glycol di(β-mercaptobutanoate), di(thioglycolate) of cyclohexane-1,4-dimethanol ethyleneoxide adduct, di(β-mercaptopropionate) of cyclohexane-1,4-dimethanol ethyleneoxide adduct, di(β-mercaptobutanoate) of cyclohexane-1,4-dimethanol ethyleneoxide adduct, di(thioglycolate) of hydrogenated bisphenol A ethyleneoxide adduct, di(β-mercaptopropionate) of hydrogenated bisphenol A ethyleneoxide adduct, di(β-mercaptobutanoate) of hydrogenated bisphenol A ethyleneoxide adduct, di(thioglycolate) of cyclohexane-1,4-dimethanol propyleneoxide adduct, di(β-mercaptopropionate) of cyclohexane-1,4-dimethanol propyleneoxide adduct, (β-mercaptobutanoate) of cyclohexane-1,4-dimethanol propyleneoxide adduct, di(thioglycolate) of hydrogenated biphenol A propyleneoxide adduct, di(β-mercaptopropionate) of hydrogenated biphenol A propyleneoxide adduct, di(β-mercaptobutanoate) of hydrogenated biphenol A propyleneoxide adduct, glycerol tri(thioglycolate), glycerol tri(β-mercaptopropionate), glycerol tri(β-mercaptobutanoate), diglycerol tetra(thioglycolate), diglycerol tetra(β-mercaptopropionate), diglycerol tetra(β-mercaptobutanoate), trimethylolpropane tri(thioglycolate), trimethylolpropane tri(β-mercaptopropionate), trimethylolpropane tri(β-mercaptobutanoate), ditrimethylolpropane tetra(thioglycolate), ditrimethylolpropane tetra(β-mercaptopropionate), ditrimethylolpropane tetra(β-mercaptobutanoate), pentaerythritol tetra(thioglycolate), pentaerythritol tetra(β-mercaptopropionate), pentaerythritol tetra(β-mercaptobutanoate), dipentaerythritol hexa(thioglycolate), dipentaerythritol hexa(β-mercaptopropionate), dipentaerythritol hexa(β-mercaptobutanoate), etc.

Of those polythiol compounds, preferred are poly(β-mercaptopropionate) and poly(β-mercaptobutanoate), and especially preferred are polyethylene glycol di(β-mercaptopropionate), pentaerythritol tetra(β-mercaptopropionate), dipentaerythritol hexa(β-mercaptopropionate), polyethylene glycol di(β-mercaptobutanoate), pentaerythritol tetra(β-mercaptobutanoate) and dipentaerythritol hexa(β-mercaptobutanoate, from the viewpoint of the availability thereof and the performance of the elastomer to be obtained.

One alone or two or more different types of the polythiol compounds for the ingredient (B) may be used here either singly or as combined. The content of the polythiol compound of the ingredient (B) in the elastomer composition of the present invention may be so defined that the functional group number ratio of the (meth) acryloyl groups in the elastomer composition to the mercapto groups in the ingredient (B) could be from 100/0.1 to 100/5n (where n indicates the number of the mercapto groups in one molecule of the polythiol compound).

Specifically, in case where a bifunctional compound having two mercapto groups in the molecule thereof is used as the polythiol compound, the functional group number ratio of (meth)acryloyl groups/mercapto groups is 100/0.1 to 100/10; in case where a tetrafunctional compound having four mercapto groups is used, the functional group number ratio of (meth)acryloyl groups/mercapto groups is 100/0.1 to 100/20; in case where a hexafunctional compound having six mercapto groups is used, the functional group number ratio of (meth)acryloyl groups/mercapto groups is 100/0.1 to 100/30.

When the ratio of the mercapto groups is less than 0.1 relative to the (meth) acryloyl groups, 100, then the polythiol compound incorporated in the composition could not sufficiently exhibit the effect thereof and the object of the present invention could not be attained. On the other hand, when the amount of the polythiol compound is more than the defined range relative to the (meth) acryloyl groups, 100, then the cured elastomer product may suffer from fluid fracture. From the above-mentioned viewpoints, the functional group number ratio of (meth) acryloyl groups/mercapto groups is preferably within a range of from 100/n to 100/5n, more preferably within a range of from 100/2n to 100/5n.

[(C) Polyfunctional (Meth)acrylate]

In the energy ray-curable elastomer composition used in the present invention, the polyfunctional (meth) acrylate (monomer ingredient) to be used as the ingredient (C) may be any and every (meth) acrylate having at least two ethylenic unsaturated bonds in the molecule thereof and is not specifically defined. Concretely there may be mentioned bifunctional (meth) acrylates such as ethylene glycol di(meth)acrylate, propylene glycol di(meth)acrylate, 1,3-butanediol di(meth)acrylate, 1,4-butanediol di(meth)acrylate, neopentyl glycol di(meth)acrylate, 1,6-hexanediol di(meth)acrylate, 1,7-heptanediol di(meth)acrylate, 1,8-octanediol di(meth)acrylate, 1,9-nonanediol di(meth)acrylate, polyethylene glycol di(meth)acrylate, polypropylene glycol di(meth)acrylate, neopentyl glycol hydroxypivalate di(meth)acrylate, dicyclopentadienyl di(meth)acrylate, caprolactone-modified dicyclopentenyl di(meth)acrylate, ethyleneoxide-modified phosphoric acid di(meth)acrylate, allylated cyclohexyl di(meth)acrylate, isocyanurate di(meth)acrylate, ethyleneoxide-modified bisphenol A di(meth)acrylate, trimethylolpropane di (meth) acrylate, etc.; trifunctional (meth)acrylates such as trimethylolpropane tri(meth)acrylate, ethyleneoxide-modified trimethylolpropane tri(meth)acrylate, dipentaerythritol tri (meth) acrylate, propionic acid-modified dipentaerythritol tri(meth)acrylate, pentaerythritol tri(meth)acrylate, propyleneoxide-modified trimethylolpropane tri(meth)acrylate, tris((meth)acryloxyethyl) isocyanurate, caprolactone-modified tris((meth)acryloxyethyl) isocyanurate, tris(meth)acryloyloxy) phosphate, etc.; tetrafunctional (meth)acrylates such as pentaerythritol tetra(meth)acrylate, ditrimethylolpropane tetra(meth)acrylate, etc.; pentafunctional (meth)acrylates such as propionic acid-modified dipentaerythritol penta(meth)acrylate, dipentaerythritol monohydroxypenta(meth)acrylate, etc.; hexafunctional (meth) acrylates such as dipentaerythritol hexa (meth) acrylate, ethyleneoxide-modified dipentaerythritol hexa(meth)acrylate, caprolactone-modified dipentaerythritol hexa(meth)acrylate, PPZ (2,2,4,4,6,6-hexa{2-(methacryloyloxy)-ethoxy}-1,3,5-triaza -2,4,6-triphospholine), etc. One alone or two or more different types of these polyfunctional (meth)acrylates may be used here either singly or as combined.

The amount of the ingredient (C) to be incorporated in the elastomer composition used in the present invention is within a range of from 1 to 8 parts by mass relative to 100 parts by mass of the ingredient (A). When the amount is less than 1 part by mass, the compression set could not be reduced sufficiently; but on the other hand, when more than 8 parts by mass, the hardness may be too high, and the performance of the cured product as rubber may worsen. From these viewpoints, the amount of the ingredient (C) is preferably within a range of from 2 to 6 parts by mass.

The elastomer composition used in the present invention is an energy-curable type, and as the energy ray, usable are UV rays, as well as ionizing radiations such as electron beams, α rays, β rays, γ rays, etc. In the present invention, preferred is use of UV rays from the viewpoint of the operability, the productivity and the economical aspect. In case where UV rays are used, the elastomer composition preferably contains a photoradical polymerization initiator as the ingredient (D). In case where ionizing radiations such as electron beams or γ rays are used, the composition may be rapidly cured even though a photopolymerization initiator is not incorporated therein.

The amount of the photoradical polymerization initiator to be contained in the elastomer composition used in the present invention is generally from 0.1 to 10 parts by mass or so relative to 100 parts by mass of all the energy-ray curable compound contained in the composition, preferably from 0.5 to 3 parts by mass. In the present invention, any known photosensitizer may be used along with the photoradical polymerization initiator.

[(D) Photoradical Polymerization Initiator]

As the photoradical polymerization initiator of the ingredient (D), herein usable are an intramolecular cleavage type and/or a hydrogen drawing type.

The intramolecular cleavage type includes benzoin derivatives, benzyl ketals [for example, Ciba Specialty Chemicals' trade name, Irgacure 651], α-hydroxyacetophenones [for example, Ciba Specialty Chemicals' trade name, Darocur 1173, Irgacure 184, Irgacure 127, Irgacure 2959], α-aminoacetophenones [for example, Ciba Specialty Chemicals' trade name, Irgacure 907, Irgacure 369], combined use of α-aminoacetophenones and thioxanthones (for example, isopropylthioxanthone, diethylthioxanthone), acylphosphine oxides [for example, Ciba Specialty Chemicals' trade name, Irgacure 819], etc.

The hydrogen drawing type includes combined use of benzophenones and amines, combined use of thioxanthones and amines, etc. The intramolecular cleavage type and the hydrogen drawing type may be used in combination. Above all, preferred are oligomerized α-hydroxyacetophenones and acrylated benzophenones. More concretely, there may be mentioned oligo[2-hydroxy-2-methyl-1-[4-(1-methylvinyl)phenyl]propan one] [for example, Lamberti SpA's trade name, ESACURE KIP150, etc.], acrylated benzophenones [for example, Daicel UCB's trade name, Ebecryl P136, etc.], imide-acrylates, etc.

As the photoradical polymerization initiator of the ingredient (D), also usable here in addition to the above are 1-[4-(2-hydroxyethoxy)phenyl]-2-methyl-1-propan-1-one, 1-hydroxycyclohexyl phenyl ketone, mixture of 1-hydroxycyclohexyl phenyl ketone and benzophenone, 2,2-dimethoxy-1,2-diphenylethan-1-one, 2,4,6-trimethylbenzoylphenylphosphine oxide, 2,4,6-trimethylbenzoylphenylphenylethoxyphosphine oxide, 2-benzyl-2-dimethylamino-1-(4-morpholinophenyl)butanone-1, 2-hydroxy-2-methyl-1-phenyl-propan-1-one, 2-methyl-1-[(4-methylthio)phenyl]-2-morpholinopropan-1-one, benzoylmethyl ether, benzoylethyl ether, benzoylbutyl ether, benzoylisopropyl ether, bis(2,4,6-trimethylbenzoyl)phenylphosphine oxide, 2-hydroxy-2-methyl-[4-(1-methylvinyl)phenyl]propanol oligomer, mixture of 2-hydroxy-2-methyl-[4-(1-methylvinyl)phenyl]propanol oligomer and 2-hydroxy-2-methyl-1-phenyl-1-propanone, isopropylthioxanthone, methyl o-benzoylbenzoate, [4-(4-methylthio)phenyl]phenylethane, etc.

[Optional Ingredients]

If desired, the elastomer composition used in the present invention may contain, as optional ingredients and within a range not detracting from the object of the present invention, for example, a monofunctional (meth)acrylate monomer, an inorganic filler, an organic thickener, a coupling agent, an antioxidant, a light stabilizer, an adhesiveness enhancer, a reinforcing agent, an internal release agent, a softening agent, a colorant, a leveling agent, a flame retardant, an antistatic agent, etc.

(Monofunctional (meth)acrylate Monomer)

The monofunctional(meth)acrylate monomer is a compound having one (meth)acryloyl group in the molecule thereof, and is a compound to be optionally used here in a suitable amount for the purpose of controlling the viscosity of the elastomer composition used in the present invention and for controlling the physical properties of the elastomer to be obtained.

The monofunctional (meth) acrylate monomer includes, for example, methyl (meth) acrylate, ethyl (meth)acrylate, propyl (meth)acrylate, n-butyl (meth)acrylate, isobutyl (meth)acrylate, tert-butyl (meth)acrylate, 2-ethylhexyl (meth)acrylate, isodecyl (meth)acrylate, lauryl (meth)acrylate, stearyl (meth) acrylate, isostearyl (meth)acrylate, tridecyl (meth)acrylate, behenyl (meth)acrylate, methoxyethyl (meth)acrylate, ethoxyethyl (meth)acrylate, propoxyethyl (meth)acrylate, butyoxyethyl (meth)acrylate, methoxydiethylene glycol (meth)acrylate, methoxytriethylene glycol (meth)acrylate, methoxytetraethylene glycol (meth)acrylate, phenoxyethyl (meth)acrylate, phenoxydiethylene glycol (meth)acrylate, phenoxytetraethylene glycol (meth)acrylate, phenoxyhexaethylene glycol (meth)acrylate, methoxydipropylene glycol (meth)acrylate, methoxytripropylene glycol (meth)acrylate, cyclohexyl (meth)acrylate, tert-butylcyclohexyl (meth)acrylate, benzyl (meth)acrylate, phenoxyethyl (meth)acrylate, dicyclopentanyl (meth)acrylate, dicyclopentenyl (meth)acrylate, bornyl (meth)acrylate, isobornyl (meth)acrylate, 2-methyl-2-adamantyl (meth)acrylate, allyl (meth)acrylate, etc. One alone or two or more of these may be used either singly or as combined.

(Inorganic Filler)

Incorporating an inorganic filler and an organic thickener to be mentioned below to the elastomer composition of the invention increases the viscosity of the composition and makes the composition thixotropic, thereby enhancing the moldability of the composition.

The inorganic filler includes silica ($SiO_2$), alumina, titania, clay minerals, etc.; and above all, preferred is a silica power, a hydrophobicated silica powder, or a mixture thereof. More concretely, there are mentioned a silica fine powder prepared by finely powdering silica according to a dry method [for example, Nippon Aerosil's trade name, Aerosil 300, etc.], a fine powder prepared by modifying the silica fine powder with trimethyldisilazane [for example, Nippon Aerosil's trade name, Aerosil RX300, etc.], a fine powder prepared by modifying the silica fine powder with polydimethylsiloxane [for example, Nippon Aerosil's trade name, Aerosil RY300, etc.], etc.

The mean particle size of the inorganic fine powder is preferably from 5 to 50 $\mu$m from the viewpoint of the ability thereto to make the composition thixotropic, more preferably from 5 to 12 $\mu$m.

(Organic Thickener)

The organic thickener is preferably a hydrogenated castor oil, an amide wax or their mixture. Concretely, the organic thickener includes a hydrogenated castor oil, or that is a hydrogenated product of a castor oil (nondrying oil of which the main ingredient is recinoleic acid) [for example, Sud-Chemie Catalysts Japan's trade name, ADVITROL 100; Kusumoto Chemical's trade name, Disparlon 305, etc.], a higher amide wax of a compound prepared by substituting the hydrogen of ammonia with an acyl group [for example, Kusumoto Chemical's trade name, Disparlon 6500, etc.], etc.

One alone or two or more of these may be used here either singly or as combined, and may be used along with the above-mentioned inorganic filler.

(Coupling Agent)

A coupling agent is used optionally in the elastomer composition of the invention in a suitable amount, for the purpose of enhancing the adhesiveness of the elastomer to be obtained to a substrate. As the coupling agent, there may be mentioned a silane-type coupling agent, a titanate-type coupling agent, an aluminium-type coupling agent, etc.; and above all, preferred is a silane-type coupling agent.

Not specifically defined, the silane-type coupling agent includes, for example, an unsaturated group-containing silane coupling agent such as vinyltrimethoxysilane, vinyltriethoxysilane, $\gamma$-methacryloxypropyltrimethoxysilane, $\gamma$-methacryloxypropyltriethoxysilane, etc.; a glycidyl group-containing silane coupling agent such as $\gamma$-glycidoxypropyltrimethoxysilane, $\gamma$-glycidoxypropyltriethoxysilane, etc.; an amino group-containing silane coupling agent such as $\gamma$-aminopropyltrimethoxysilane, $\gamma$-aminopropyltriethoxysilane, N-$\beta$-(aminoethyl)-$\gamma$-aminopropyltrimethoxysilane, N-$\beta$-(aminoethyl)-$\gamma$-aminopropyltriethoxysilane, etc.; a mercapto group-containing silane coupling agent such as $\gamma$-mercaptopropyltrimethoxysilane, $\gamma$-mercaptopropyltriethoxysilane, etc. One alone or two or more of these silane-type coupling agents may be used here either singly or as combined.

(Antioxidant)

As the antioxidant to be used in the elastomer composition of the invention, there may be mentioned phenolic, sulfur-containing and phosphorus-containing antioxidants.

As the phenolic antioxidant, there are exemplified 2,6-di-t-butyl-p-cresol, butylated hydroxyanisole, 2,6-di-t-butyl-4-ethylphenol, stearyl $\beta$-(3,5-di-t-butyl-4-hydroxyphenyl)propionate, 2,2'-methylenebis(4-methyl-6-t-butylphenol), 2,2'-methylenebis(4-ethyl-6-t-butylphenol), 4,4'-thiobis(3-methyl-6-t-butylphenol), 4,4'-butylidenebis(3-methyl-6-t-butylphenol), 1,1,3-tris(2-methyl-4-hydroxy-5-t-butylphenylbutane), 1,3,5-trimethyl-2,4,6-tris(3,5-di-t-butyl-4-hydroxybenzyl) benzene, tetrakis-[methylene-3-(3',5'-di-t-butyl-4'-hydroxyphenyl)p ropionate]methane, bis[3,3'-bis-(4'-hydroxy-3'-t-butylphenyl)butyric acid] glycol ester, 1,3,5-tris(3',5'-di-t-butyl-4'-hydroxybenzyl)-S-triazine-2 ,4,6-(1H,3H,5H)trione, $\alpha$-tocopherol, etc.

As the sulfur-containing antioxidant, there are exemplified dilauryl 3,3'-thiodipropionate, dimyristyl 3,3'-thiodipropionate, distearyl 3,3'-thiodipropionate, etc.; and as the phosphorus-containing antioxidant, there are exemplified triphenyl phosphite, diphenyl-isodecyl phosphite, phenyl-isodecyl phosphite, tris(nonylphenyl) phosphite, tris(2,4-di-t-butylphenyl) phosphite, 2,2'-methylenebis(4,6-di-t-butylphenyl)octyl phosphite, etc.

One alone or two or more of these antioxidants may be used here either singly or as combined. Above all, preferred are phenolic antioxidants.

The amount of the antioxidant to be incorporated in the composition may be determined depending on the type thereof, but in general, the amount may be from 0.01 to 5 parts by mass relative to 100 parts by mass of the total of the energy racy-curable compound of the ingredient (A), the polythiol compound of the ingredient (B) and the monofunctional (meth)acrylate monomer of the optional ingredient, preferably from 0.1 to 3 parts by mass.

(Light Stabilizer)

The light stabilizer to be used in the elastomer composition of the invention includes benzophenone-type, benzotriazole-type, benzoate-type, triazine-type or the like UV absorbents, hindered amine-type light stabilizers, etc. Of those, preferred are hindered amine-type light stabilizers.

The hindered amine-type light stabilizer includes bis(2,2,6,6-tetramethyl-4-piperidyl) sebacate, bis(1,2,2,6,6-pentamethyl-4-piperidyl) sebacate, 4-benzoyloxy-2,2,6,6-tetramethylpiperidine, 1-[2-[3-(3,5-di-tert-butyl-4-hydroxyphenyl)propionyloxy]et hyl]-4-[3-(3,5-di-tert-butyl-4-hydroxyphenyl)propionyloxy] -2.2.6.6-tetramethylpiperidine, 1,2,2,6,6-pentamethyl-4-piperidinyl methacrylate, bis(1,2,2,6,6-pentamethyl-4-piperidinyl)[[3,5-bis(1,1-dime thylethyl)-4-hydroxyphenyl]methyl]butyl malonate, bis(2,2,6,6-tetramethyl-1-(octyloxy)-4-piperidinyl) decane-dioate, N,N',N",N'''-tetrakis-(4,6-bis-(butyl-(N-methyl-2,2,6,6-tet ramethylpiperidin-4-yl)amino)triazin-2-yl)-4,7-diazadecane -1,10-diamine, polycondensate of dibutyldiamine-1,3,5-triazine-N,N'-bis(2,2,6,6-tetramethyl -4-piperidyl-1,6-hexamethylenediamine and N-(2,2,6,6-tetramethyl-4-piperidyl)butylamine, poly[[6-(1,1,3,3-tetramethylbutyl)amino-1,3,5-triazine-2,4 -diyl][(2,2,6,6-tetramethyl-4-piperidyl)imino]hexamethylen e[(2,2,6,6-tetramethyl-4-piperidyl)imino]], polymer of dimethyl succinate and 4-hydroxy-2,2,6,6-tetramethyl-1-piperidine-ethanol, 2,2,4,4-tetramethyl-20-(β-lauryloxycarbonyl)ethyl-7-oxa-3, 20-diazadispiro[5,1,11,2]heneicosan-21-one, β-alanine N-(2,2,6,6-tetramethyl-4-piperidinyl)dodecyl ester/tetradecyl ester, N-acetyl-3-dodecyl-1-(2,2,6,6-tetramethyl-4-piperidinyl)py rrolidine-2,5-dione, 2,2,4,4-tetramethyl-7-oxa-3,20-diazadispiro[5,1,11,2]henei cosan-21-one, 2,2,4,4-tetramethyl-21-oxa-3,20-diazabicyclo-[5,1,11,2]-he neicosane-20-propanoic acid dodecyl ester/tetradecyl ester propanedioic acid, [(4-methoxyphenyl)-methylene]-bis(1,2,2,6,6-pentamethyl-4-piperidinyl) ester, 2,2,6,6-tetramethyl-piperidinol higher fatty acid ester, 1,3-benzenedicarboxyamide-N,N'-bis(2,2,6,6-tetramethyl-4-p iperidinyl), etc.

One alone or two or more of these may be used here either singly or as combined. The amount of the light stabilizer to be incorporated in the composition may be determined depending on the type thereof, but in general, the amount may be from 0.01 to 5 parts by mass relative to 100 parts by mass of the total of the energy racy-curable compound of the ingredient (A), the polythiol compound of the ingredient (B), the polyfunctional (meth)acrylate of the ingredient (C) and the monofunctional (meth)acrylate monomer of the optional ingredient, preferably from 0.1 to 3 parts by mass.

(Adhesiveness Enhancer, Others)

The adhesiveness enhancer optionally used in the elastomer composition of the invention includes, for example, terpene resins, terpenephenol resins, coumarone resins, coumarone-indene resins, petroleum hydrocarbons, rosin derivatives, etc., and one alone or two or more of these may be used here either singly or as combined.

In addition, if desired, a reinforcing agent such as glass fibers, carbon fibers, etc.; a hydrogenated castor oil; a dripping inhibitor such as silicic anhydride fine particles, etc.; an internal release agent, for example, a fatty acid such as stearic acid, etc., a fatty acid metal salt such as calcium stearate, etc., a fatty acid amide such as stearamide, etc., a fatty acid ester, a polyolefin wax, a paraffin wax, etc.; a softening agent such as a process oil, etc,; a colorant; a leveling agent, a flame retardant; an antistatic agent and the like may be incorporated in the elastomer composition.

Basically the elastomer composition used in the present invention is solventless, but if desired, a solvent may be added thereto.

[Preparation of Elastomer Composition]

The method for preparing the elastomer composition used in the present invention is not specifically defined, for which any known method is applicable. For example, the composition may be prepared by kneading the above-mentioned ingredients (A) to (C) and the optional additives, using a temperature-controllable kneader, for example, a single-screw extruder, a double-screw extruder, a planetary mixer, a double-screw mixer, a high-shear mixer, etc.

Preferably, the viscosity of the elastomer composition thus obtained as above is from 1 to 1000 Pa·s at 50°C. When the viscosity is at least 1 Pa.s, then liquid leakage or the like can be prevented and a case where a molded article having an intended shape could not be obtained can be evaded. On the other hand, when the viscosity is at most 1000 Pa·s, then filling with the composition may be easy, and in case where a mold is used, the composition does not push up the mold, and therefore a cured product having an intended shape can be readily obtained. From the above-mentioned viewpoints, the viscosity of the elastomer composition at 50°C is more preferably within a range of from 10 to 50 Pa·s.

[Production of Elastomer Cured Product]

In the present invention, an elastomer cured product can be obtained by exposing the energy ray-curable elastomer composition prepared as above, to energy rays.

As described above, UV rays are preferred for the energy rays, from the viewpoint of the operability, the productivity and the economic aspect. In case where UV rays are used, the elastomer composition used in the present invention preferably contains a photoradical polymerization initiator.

The UV ray source includes a xenon lamp, a low-pressure mercury lamp, a high-pressure mercury lamp, a metal halide lamp, a microwave-assisted excimer lamp, etc. As the atmosphere for UV irradiation, preferred is an inert gas atmosphere of nitrogen gas, carbon dioxide gas or the like, or an atmosphere having a reduced oxygen concentration; however, the composition could be fully cured even in an ordinary air atmosphere. The irradiation atmosphere temperature may be generally from 10 to 200°C.

The curing method for the elastomer composition through exposure thereof to energy rays, preferably UV rays may be suitably selected, depending on the use of the elastomer cured product to be obtained.

Next described is where the elastomer composition is formed into a seal layer-combined part for gaskets for computer HDD (hard disc devices) or the like.

(Seal Layer-Combined Part)

When the energy ray-curable elastomer composition used in the present invention is applied onto an adherend and cured through exposure to energy rays, preferably to UV rays, a seal layer-combined part can be produced. As the adherend, for example, usable is one made of a hard resin, but preferred is a metallic adherend in view of the processability thereof. The metal is not specifically defined. For example, the adherend may be suitably selected from cold-rolled steel plates, zinc-plated steel plates, aluminium/zinc alloy-plated steel plates, stainless steel plates, aluminium plates, aluminium alloy plates, magnesium plates, magnesium alloy plates, etc. In addition, those produced by injection-molding magnesium are also usable. From the viewpoint of the corrosion resistance thereof, preferred are nickel-plated metals.

The seal layer-combined part includes gaskets for HDD. The thickness of the seal layer may be suitably selected depending on the use thereof, and may be generally from 0.1 to 2.0 mm or so.

Application of the composition to an adherend may be attained in any desired method of using a coating liquid prepared by optionally controlling the temperature of the composition and controlling the viscosity thereof. For example, employable is a method of gravure coating, roll coating, spin coating, reverse coating, bar coating, screen coating, blade coating, air knife coating, dipping, dispensing or the like. The composition is applied and molded, and then exposed to energy ray, preferably to UV rays to cure the coating liquid, thereby obtaining a seal layer-combined part.

[Properties of Elastomer Cured Product]

As described above, the energy ray-curable elastomer composition used in the present invention contains an energy ray-curable compound of the ingredient (A) and a polythiol compound of the ingredient (B), employing the ene-thiol energy ray-curable system, and therefore, without changing the type of the uncured energy ray-curable compound in the composition, the molecular weight between crosslinks of the cured product of the composition can be thereby increased, and thus, the invention can provide an elastomer cured product satisfying both high elongation at break and good processability.

Preferably, the molecular weight between crosslinks of the elastomer cured product obtained by curing the elastomer composition through exposure thereof to energy rays, as computed according to the Flory-Rehner's equation shown below, falls within a range of from 4,000 to 55,000. When the molecular weight between crosslinks is at least 4,000, then the elongation at break of the elastomer cured product can be favorably increased; but on the other hand, when the molecular weight between crosslinks is at most 55,000, then the elastomer cured product can be excellent in processability and can have a practical strength enough for elastomer.

(Molecular Weight between Crosslinks Mc)

The molecular weight between crosslinks Mc of the elastomer cured product can be computed according to the following method.

The molecular weight between crosslinks Mc can be computed according to the Flory-Rehner's equation,

[Equation 1]

$$Mc = \frac{\rho v_1 \left( v_2/2 - 3\sqrt{v_2} \right)}{\ln(1 - v_2) + v_2 + \chi_1 v_2^2}$$

[wherein Mc indicates the molecular weight between crosslinks [g/mol]; p means the density [g/cm$^3$]; $\nu_1$ means the molar volume of the solvent (toluene) [cm$^3$/mol]; $\nu_2$ means the volume swelling ratio [-]; $\chi_1$ means the Flory's $\chi$ parameter [-] (estimated from the sp value of the solvent and the elastomer cured product)].

In the present invention, the value computed according to the Flory-Rehner's equation is employed as the molecular weight between crosslinks Mc.

The molecular weight between crosslinks Mc can be controlled by selecting the type of the polythiol compound of the ingredient (B) to be used and selecting the ratio of the amount of the polythiol compound to the amount of the (meth) acryloyl group-having energy ray-curable compound of the ingredient (A) to be used, by which, eventually, the elongation at break can be controlled.

In the present invention, as described above, a bifunctional to hexafunctional thiol compound having from 2 to 6 mercapto groups in the molecule thereof is used as the polythiol compound of the ingredient (B), and the functional group number ratio of the (meth)acryloyl groups in the energy ray-curable compound of the ingredient (A) to the mercapto groups in the ingredient (B), [CH=C (R) -COO] /SH ratio (in which R means a hydrogen atom or a methyl group) is so defined as to fall within a range of from 100/0.1 to 100/5n (where n indicates the number of the mercapto groups in one molecule of the polythiol compound), whereby the molecular weight between crosslinks Mc of the elastomer cured product to be obtained can be controlled to a desired value falling within a range of from 4,000 to 55,000.

For example, as shown in Examples given hereinunder, in case where a bifunctional urethane-type acrylate oligomer is used as the ingredient (A), a bifunctional thiol compound is used as the ingredient (B) and the ratio [CH=C(R)-COO]/SH is changed to be from 100/2 to 100/10, then the molecular weight between crosslinks Mc increases from about 5,600 to 31,900, and the elongation at break at room temperature of the elastomer cured product Eb increases from 360% to 875%

On the other hand, in the same manner as above, in case where a tetrafunctional urethane-type acrylate oligomer is used as the ingredient (A), a tetrafunctional thiol compound is used as the ingredient (B) and the ratio [CH=C(R) -COO] /SH is changed to be from 100/5 to 100/20, then the molecular weight between crosslinks Mc increases from about 6,500 to 51,000, and the elongation at break at room temperature of the elastomer cured product Eb increases from 400% to 955%.

Further in the same manner as above, in case where a bifunctional urethane-type acrylate oligomer is used as the ingredient (A), a hexafunctional thiol compound is used as the ingredient (B) and the ratio [CH=C(R)-COO]/SH is changed to be from 100/5 to 100/30, then the molecular weight between crosslinks Mc increases from about 4,900 to 36,000, and the elongation at break at room temperature of the elastomer cured product Eb increases from 335% to 775%.

The method for measuring the elongation at break Eb is described hereinunder.

As in the above, in case where any of bifunctional to hexafunctional thiol compounds is used here and even when the amount added thereof is small, the molecular weight between crosslinks of the elastomer cured product increases, and as a result, the elongation at break at room temperature thereof can greatly increases. In addition, the same tendency may apply to the elongation at break at 80°C.

Of bifunctional to hexafunctional thiol compounds, in case where a bifunctional thiol compound with which the crosslink density could be the smallest is used, the elongation at break increases more significantly, and with the increase in the number of the mercapto groups in one molecule of the compound to 4 (tetrafunctional) and to 6 (hexafunctional), the increase in the elongation at break tends to lower.

In addition, in general, when the molecular weight between crosslinks increases, then C.S. (compression set) may increase; however, in the present invention, the ene-thiol energy ray-curable system is employed, and therefore even when the molecular weight between crosslinks increases, the compression set can be prevented from increasing.

Further in the present invention, incorporating the polyfunctional (meth)acrylate (C) in the composition prevents the compression set from increasing. The compression set is preferably smaller, and is more preferably at most 30%. The method for measuring C.S. is described hereinunder.

[Use of Energy Ray-Curable Elastomer Composition]

The energy ray-curable elastomer composition used in the present invention employs the ene-thiol energy ray-curable system, and therefore, without changing the type of the uncured energy ray-curable compound in the composition, the molecular weight between crosslinks of the cured product of the composition can be increased, and thus, the present invention can provide an elastomer cured product satisfying both high elongation at break and good processability. Further, the composition contains the polyfunctional (meth)acrylate incorporated therein, therefore providing an elastomer cured product of which the compression set is significantly reduced.

The elastomer cured product has an application for gaskets, for example, for HDD.

EXAMPLES

The invention is described in more detail with reference to the following Examples, by which, however, the invention should not be limited at all.

The physical properties in the Examples were determined according to the methods mentioned below.

(1) Physical Properties of Cured Product:

(1-1) Molecular Weight between Crosslinks Mc of Elastomer Cured Product:

The molecular weight between crosslinks Mc of the elastomer cured product was computed according to the Flory-Rehner's equation described in the main text of the specification. The volume swelling ratio in the equation was measured according to the method mentioned below.

(Volume Swelling Ratio)

A test piece of $25 \times 12 \times 2$ mm was immersed in 50 mL of toluene for 24 hours, and the dimension thereof before and after immersion was measured. From the data, the volume swelling ratio was computed.

(1-2) Hardness:

The JIS-A hardness was measured according to JIS K6253 (after 15 seconds).

(1-3) Elongation at Break (Eb).:

The elastomer cured sheet having a thickness of 2 mm was blanked out to give a DIN3 dumbbell-shape test piece. Using a tensile tester [ORIENTEC's trade name, "Tensilon RTC-1225A"], the test piece was tested for a tensile test under the condition of a test temperature of 23°C and 80°C and a pulling rate of 200 mm/min, according to JIS K 6251, thereby measuring the elongation at break Eb of the sheet.

(1-4) Compression Set (C.S.):

The elastomer cured sheet having a thickness of 2 mm was cut into pieces of 2 cm square, and five those pieces were piled up to prepare a sample. According to JIS K 6262, the sample was measured for the compressions set under the condition of a test temperature of 70°C.

(2) Evaluation in Gasket:

(2-1) Gasket Heat Shock Test:

The elastomer composition was applied onto a nickel-plated aluminium plate to form a first coating film thereon, and then the same elastomer composition was further applied thereonto to form a second coating film in such a manner that the total thickness could be 1.1 mm. This was exposed to UV rays (using Fusion UV Systems Japan's "Light Hammer-6") under the condition at a luminance of 700 mW/cm$^2$ and a cumulative quantity of light of 10,000 mJ/cm$^2$, whereby the coating film was cured to give a gasket layer-combined part.

Next, the gasket of the gasket layer-combined part was pressurized at a compression ratio of 40% and tested in a heat shock test of 100 cycles in which one cycle was at -40°C for 30 minutes and at 85°C for 30 minutes. In the test, the gasket was checked for the presence or absence of fracture, and the samples with fracture were expressed as "x", and those with no fracture were as "O".

(2-2) Rework Test of Cover Plate in HDD:

The cover plate of a molded gasket was fit in a base plate, left at 85°C for 24 hours, then the cover plate was removed, and the gasket was visually checked for the presence or absence of breaking or peeling. The test was repeated five times, and finally the thus-tested sample was checked for the reworkability.
O: The gasket was neither broken nor peeled, and in removing the cover plate from the base plate, the resistance was small and the cover plate was readily removed out, and the operability was good.
$\times$: At least a part of the gasket was broken or peeled.

Examples 1 to 7 and Comparative Examples 1 to 5:

A UV-curable elastomer composition comprising the ingredients shown in Table 1 was prepared, and formed into an elastomer cured sheet according to the method mentioned below, and further, the sheet was cut into the size for the tests.

First, two glass sheets of 15 cm × 15 cm × 3 mm each, and two releasable polyethylene terephthalate (PET) films of 15 cm × 15 cm × 0.06 mm each were prepared.

With keeping a predetermined thickness using spacers, the UV-curable elastomer composition prepared in the above was sandwiched between the releasable PET films and further sandwiched between the glass sheets, and then exposed to UV rays (using UV radiator "UV1501BA-LT" and metal halide lamp "SE-1500M" both by Senengineering) at a temperature of 23°C and under the condition at a luminance of 150 mW/cm$^2$ and a radiation time of 60 seconds, whereby the elastomer composition was cured.

Next, the elastomer cured sheet was peeled from the glass sheet and the releasable PET film, annealed at 120°C for 4 hours, then cut into the size for the tests, and used for measuring the physical properties thereof. The test data of the physical properties are shown in Table 1.

[Table 1]

Table 1-1

| | | | Example | | | | | | |
|---|---|---|---|---|---|---|---|---|---|
| | | | 1 | 2 | 3 | 4 | 5 | 6 | 7 |
| Ingredients | Ingredient (A) | energy ray-curable oligomer[*1] | 100 | 100 | 100 | 100 | 100 | 100 | 100 |
| | Ingredient (B) | tetrafunctional thiol compound [*2] | 3 | 3 | 3 | 3 | 3 | - | - |
| | | bifunctional thiol compound[*3] | - | - | - | - | - | 2.3 | - |
| | | hexafunctional thiol compound[*4] | - | - | - | - | - | - | - |
| | Ingredient (C) | hexafunctional (meth)acrylate[*5] | 2 | 5 | - | - | - | 5 | 5 |
| | | bifunctional (meth)acrylate[*6] | - | - | 5 | - | - | - | - |
| | | trifunctional (meth)acrylate A[*7] | - | - | - | 5 | - | - | - |
| | | trifunctional (meth)acrylate B[*8] | - | - | - | - | 5 | - | - |
| | Other Ingredients | monofunctional (miath)acrylate C[*9] | - | - | - | - | - | - | - |
| | | monofunctional (methacrylate D[*10] | - | - | - | - | - | - | - |
| | | monofunctional (meth)acrylate E[*11] | - | - | - | - | - | - | - |
| | mercapto groups in ingredient (B)/(meth)acryloyl groups in ingredient (A) | | 15/100 | 15/100 | 15/100 | 15/100 | 15/100 | 7.5/100 | 22.5/100 |
| Evaluation Results | Physical Properties of Cured Product | molecular weight between crosslinks Mc (g/mol) | 17005 | - | - | - | - | - | - |
| | | hardness (JIS-A) | 18 | 31 | 24 | 29 | 25 | 26 | 30 |
| | | elongation at break (%) | 575 | 375 | 445 | 400 | 410 | 405 | 380 |
| | | compression set (%) | 26 | 15 | 22 | 19 | 12 | 18 | 15 |
| | Evaluation in Gasket | heat shock test | ○ | ○ | ○ | ○ | ○ | ○ | ○ |
| | | rework test | ○ | ○ | ○ | ○ | ○ | ○ | ○ |

EP 2 471 873 B1

[Table 2]

Table 1-2

| | | | Comparative Example | | | | |
|---|---|---|---|---|---|---|---|
| | | | 1 | 2 | 3 | 4 | 5 |
| Ingredients | Ingredient (A) | energy ray-curable oligomer[*1] | 100 | 100 | 100 | 100 | 100 |
| | Ingredient (B) | tetrafunctional thiol compound[*2] | 3 | 3 | 3 | 3 | 3 |
| | | bifunctional thiol compound[*3] | - | - | - | - | - |
| | | hexafunctional thiol compound[*4] | - | - | - | - | - |
| | Ingredient(C) | hexafunctional (meth)acrylate[*5] | - | 10 | - | - | - |
| | | bifunctional (meth)acrylate[*6] | - | - | - | - | - |
| | | trifunctional (meth)acrylate A[*7] | - | - | - | - | - |
| | | trifunctional (meth)acrylate B[*8] | - | - | - | - | - |
| | Other Ingredients | monofunctional (meth)acrylate C[*9] | - | - | 5 | - | - |
| | | monofunctional (meth)acrylate D[*10] | - | - | - | 5 | - |
| | | monofunctional (meth)acrylate E[*11] | - | - | - | - | 5 |
| mercapto groups in ingredient (B)/(meth)acryloyl groups in ingredient (A) | | | 15/100 | 15/100 | 15/100 | 15/100 | 15/100 |

(continued)

|  |  |  | Comparative Example | | | | |
|---|---|---|---|---|---|---|---|
|  |  |  | 1 | 2 | 3 | 4 | 5 |
| Evaluation Results | Physical Properties of Cured Product | molecular weight between crosslinks Mc (g/mol) | 24413 | - | 7987 | 28127 | 25411 |
|  |  | hardness (JIS-A) | 11 | 58 | 32 | 9 | 12 |
|  |  | elongation at break (%) | 690 | 175 | 750 | 655 | 600 |
|  |  | compression set (%) | 38 | immeasurable | 45 | 37 | 42 |
|  | Evaluation in Gasket | heat shock test | ○ | × | ○ | ○ | ○ |
|  |  | rework test | × | × | × | × | × |

[Notes]
*1: Energy ray-curable oligomer: Kyoeisha Chemical's trade name "Lighttack PUA-KH32M" (mixture of bifunctional urethane-type acrylate oligomer, isobornyl acrylate, phenoxyethyl acrylate and Irgacure 2959-corresponding chemical (photopolymerization initiator), blend ratio of bifunctional urethane-type acrylate oligomer to (isobornyl acrylate and phenoxyethyl acrylate) = 75/25 by mass).
*2: Tetrafunctional thiol compound: SC Organic Chemical's trade name "PEMP", pentaerythritol tetrakis(3-mercaptopropionate).
*3: Bifunctional thiol compound: SC Organic Chemical's trade name "EGMP-4", tetraethylene glycol bis(3-mercaptopropionate).
*4: Hexafunctional thiol compound: SC Organic Chemical's trade name "DPMP"dipentaerythritol Hexakis(3-mercaptopropionate).
*5: Hexafunctional (meth)acrylate: Kyoeisha Chemical's trade name "PPZ", 2,2,4,4,6,6-hexa{2-(methacryloyloxy)ethoxy}-1,3,5-triaza-2,4,6-triphosphorin.
*6: Bifunctional (meth)acrylate: Kyoeisha Chemical's trade name "Light Acrylate 1,9 ND-A", 1,9-nonanediol diacrylate.
*7: Trifunctional (meth)acrylate A: Toa Gosei's trade name "Aronix M-327", $\varepsilon$-caprolactone-modified tris(acryloxyethyl) isocyanurate.
*8: Trifunctional (meth) acrylate B: Kyoeisha Chemical's trade name "Light Acrylate TMP-A", trimethylolpropane triacrylate.
*9: Monofunctional (meth)acrylate C: Kojinsha's trade name "ACMO", acryloylmorpholine.
*10: Monofunctional (meth)acrylate D: Kyoeisha Chemical's trade name "Light Acrylate EHDG-AT", 2-ethylhexyl diglycol acrylate.
*11: Monofunctional (meth)acrylate E: Toa Gosei's trade name "Aronix M-101A", phenol ethyleneoxide-modified acrylate

INDUSTRIAL APPLICABILITY

The energy ray-curable elastomer composition o an elastomer cured product for use in the present invention, of which the molecular weight between crosslinks can be increased and which satisfies both high elongation at break and good processability and has a small compression set, not changing the type of the uncured, energy ray-curable compound.

The elastomer cured product is is used for gaskets, for example, for HDD.

**Claims**

1. A gasket comprising a cured energy ray-curable elastomer composition containing (A) a (meth) acryloyl group-having energy ray-curable compound, (B) a polythiol compound having from 2 to 6 mercapto groups in the molecule, and (C) a polyfunctional (meth)acrylate, wherein the functional group number ratio of the (meth) acryloyl groups in the ingredient (A) to the mercapto groups in the ingredient (B) is from 100/0.1 to 100/5n (where n indicates the number of the mercapto groups in one molecule of the polythiol compound) and wherein the amount of the ingredient (C) is from 1 to 8 parts by mass relative to 100 parts by mass of the ingredient (A).

2. The gasket according to claim 1, wherein the molecular weight between crosslinks of the energy ray-irradiated cured product, as computed according to the Flory-Rehner's equation, is from 4,000 to 55,000.

3. The gasket according to claim 1 or 2, wherein the (meth)acryloyl group-having energy ray-curable compound (A) is a compound having at least two (meth) acryloyl groups in the molecule thereof.

4. The gasket according to claim 3, wherein the (meth)acryloyl group-having energy ray-curable compound is an energy ray-curable oligomer.

5. The gasket according to claim 4, wherein the energy ray-curable oligomer is at least one selected from urethane-type (meth)acrylate oligomers, polyester-type (meth)acrylate oligomers, polyether-type (meth) acrylate oligomers, epoxy-type (meth)acrylate oligomers, conjugated diene polymer-type (meth)acrylate oligomers and their hydrogenated derivatives.

6. The gasket according to any of claims 1 to 5, wherein the polythiol compound having from 2 to 6 mercapto groups in the molecule thereof (B) is a β-mercaptopropionic acid ester with a polyalcohol having from 2 to 6 hydroxyl groups.

7. The gasket according to claim 6, wherein the polyalcohol having from 2 to 6 hydroxyl groups is an alkanediol having from 2 to 20 carbon atoms, a poly(oxyalkylene) glycol, glycerol, diglycerol, trimethylolpropane, ditrimethylolpropane, pentaerythritol or dipentaerythritol.

8. The gasket according to any of claims 1 to 7, in which the energy ray is a UV ray and which contains (D) a photoradical polymerization initiator.

9. The gasket according to claim 8, wherein the photoradical polymerization initiator is an intramolecular cleavage type and/or a hydrogen drawing type.

10. The gasket of any of claims 1 to 9, wherein the gasket is for hard disc drives.

**Patentansprüche**

1. Dichtung, umfassend eine ausgehärtete durch einen Energiestrahl aushärtbare Elastomerzusammensetzung, die (A) eine durch einen Energiestrahl aushärtbare Verbindung mit (Meth)Acrylgruppe, (B) eine Polythiolverbindung mit 2 bis 6 Mercaptogruppen im Molekül und (C) ein polyfunktionelles (Meth)Acrylat enthält, worin das Verhältnis der Anzahl der funktionellen Gruppen der (Meth)Acrylgruppen im Inhaltsstoff (A) zu den Mercaptogruppen im Inhaltsstoff (B) von 100/0,1 bis 100/5n beträgt (wobei n die Anzahl der Mercaptogruppen in einem Molekül der Polythiolverbindung angibt) und worin die Menge des Inhaltsstoffs (C) 1 bis 8 Masseteile relativ zu 100 Masseteilen des Inhaltsstoffs (A) beträgt.

2. Dichtung nach Anspruch 1, worin die relative Molekülmasse zwischen Vernetzungsstellen des mit einem Energiestrahl bestrahlten ausgehärteten Erzeugnisses 4000 bis 55000 beträgt, berechnet gemäß der Flory-Rehner-Gleichung.

3. Dichtung nach Anspruch 1 oder 2, worin die durch einen Energiestrahl aushärtbare Verbindung mit (Meth)Acrylgruppe (A) eine Verbindung mit mindestens zwei (Meth)Acrylgruppen in ihrem Molekül ist.

4. Dichtung nach Anspruch 3, worin die durch einen Energiestrahl aushärtbare Verbindung mit (Meth)Acrylgruppe ein durch einen Energiestrahl aushärtbares Oligomer ist.

5. Dichtung nach Anspruch 4, worin das durch einen Energiestrahl aushärtbare Oligomer mindestens eines ist, das aus Folgendem ausgewählt wurde: (Meth)Acrylate-Oligomere vom Urethan-Typ, (Meth)Acrylate-Oligomere vom Polyester-Typ, (Meth)Acrylate-Oligomere vom Polyether-Typ, (Meth)Acrylate-Oligomere vom Epoxid-Typ, (Meth)Acrylate-Oligomere vom Typ eines konjugierten Dien-Polymers und ihre hydrierten Derivate.

6. Dichtung nach einem der Ansprüche 1 bis 5, worin die Polythiolverbindung mit 2 bis 6 Mercaptogruppen in ihrem Molekül (B) ein β-Mercaptopropionsäureester mit einem Polyalkohol, der 2 bis 6 Hydroxygruppen hat, ist.

**7.** Dichtung nach Anspruch 6, worin der Polyalkohol, der 2 bis 6 Hydroxygruppen hat, ein Alkandiol mit 2 bis 20 Kohlenstoffatomen, ein Poly(oxyalkylen)-Glykol, Glycerin, Diglycerin, Trimethylolpropan, Di-Trimethylolpropan, Pentaerythritol oder Di-Pentaerythritol ist.

**8.** Dichtung nach einem der Ansprüche 1 bis 7, bei welcher der Energiestrahl ein UV-Strahl ist und die einen Fotoradikal-Polymerisationsinitiator (D) enthält.

**9.** Dichtung nach Anspruch 8, worin der Fotoradikal-Polymerisationsinitiator vom Intramolekularspaltungstyp und/oder vom Wasserstoffakzeptortyp ist.

**10.** Dichtung nach einem der Ansprüche 1 bis 9, worin die Dichtung für Festplattenlaufwerke dient.

**Revendications**

**1.** Joint statique comprenant une composition élastomère durcie pouvant durcir grâce à un rayonnement énergétique contenant (A) un composé pouvant durcir grâce à un rayonnement énergétique ayant un groupe (méth)acryloyle, (B) un composé polythiol ayant de 2 à 6 groupes mercapto dans la molécule, et (C) un méthacrylate polyfonctionnel, dans lequel le rapport des nombres de groupes fonctionnels des groupes (méth)acryloyle dans l'ingrédient (A) aux groupes mercapto dans l'ingrédient (B) est de 100/0,1 à 100/5n (où n indique le nombre de groupes mercapto dans une molécule du composé polythiol) et dans lequel la quantité de l'ingrédient (C) est de 1 à 8 parties en masse par rapport à 100 parties en masse de l'ingrédient (A).

**2.** Joint statique selon la revendication 1, dans lequel le poids moléculaire entre les réticulations du produit durci irradié d'un rayonnement énergétique, tel que calculé selon l'équation de Flory-Rehner est de 4 000 à 55 000.

**3.** Joint statique selon la revendication 1 ou 2, dans lequel le composé pouvant durcir par rayonnement énergétique ayant un groupe (méth)acryloyle (A) est un composé ayant au moins deux groupes (méth)acryloyle dans sa molécule.

**4.** Joint statique selon la revendication 3, dans lequel le composé pouvant durcir par rayonnement énergétique ayant un groupe (méth)acryloyle est un oligomère pouvant durcir grâce à un rayonnement énergétique.

**5.** Joint statique selon la revendication 4, dans lequel l'oligomère pouvant durcir par rayonnement énergétique est au moins l'un sélectionné parmi les oligomères (méth)acrylate du type uréthane, les oligomères (méth)acrylate du type polyester, les oligomères (méth)acrylate du type polyéther, les oligomères (méth)acrylate du type époxy et les oligomères (méth)acrylate du type polymère diène conjugué et leurs dérivés hydrogénés.

**6.** Joint statique selon l'une quelconque des revendications 1 à 5, dans lequel le composé polythiol ayant de 2 à 6 groupes mercapto dans sa molécule (B) est un ester d'acide β-mercaptopropionique avec un polyalcool ayant de 2 à 6 groupes hydroxyle.

**7.** Joint statique selon la revendication 6, dans lequel le polyalcool ayant de 2 à 6 groupes hydroxyle est un alcanediol ayant de 2 à 20 atomes de carbone, un poly(oxyalkylène)glycol, glycérol, diglycérol, triméthylolpropane, ditriméthylolpropane, pentaérythritol ou dipentaérythritol.

**8.** Joint statique selon l'une quelconque des revendications 1 à 7, dans lequel le rayonnement énergétique est un rayonnement UV et qui contient (D) un initiateur de photo-polymérisation par radicaux libres.

**9.** Joint statique selon la revendication 8, dans lequel l'initiateur de photo-polymérisation par radicaux libres est un type à clivage intramoléculaire et/ou un type à extraction d'hydrogène.

**10.** Joint statique selon l'une quelconque des revendications 1 à 9, le joint statique étant destiné aux disques durs.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009108158 A
- JP 2008297350 A
- JP 7330837 A
- JP 2003007047 A
- JP 4034098 B
- JP 2007070417 A

**Non-patent literature cited in the description**

- Future Outlook of UV/EB Curing Technology. CMC Publishing, 2002, 39-50